# EUROPEAN PATENT APPLICATION

(11) **EP 4 422 028 A1**
(43) Date of publication of application: **28.08.2024**
(21) Application number: 22897429.1
(22) Date of filing: 13.10.2022
(51) Int. Cl.: H02J 7/04

(54) **CHARGING CONTROL METHOD, CONTROLLER, CHARGING TERMINAL, AND READABLE STORAGE MEDIUM**

(30) Priority: 25.11.2021 CN 202111412944
(71) Applicant: ZTE Corporation, Shenzhen, Guangdong 518057 (CN)
(72) Inventor: ZHANG, Qingli, Shenzhen, Guangdong 518057 (CN)
(74) Representative: Betten & Resch
(86) International application number: PCT/CN2022/125140
(87) International publication number: WO 2023/093345

(57) **Abstract**

Disclosed in embodiments of the present application are a charging control method, a controller, a charging terminal, and a readable storage medium. The method comprises: acquiring an output capability parameter of the charger and a battery input capability parameter of the charging terminal (S200); comparing the output capability parameter with the battery input capability parameter to obtain a first charging power (S210); acquiring a second charging power of each charging mode combination of the charging terminal (S220); comparing the first charging power with the second charging power to screen out several candidate charging mode combinations from the plurality of charging mode combinations (S230); and acquiring a first charge efficiency of the candidate charging mode combinations, determining a target charging mode combination from the plurality of candidate charging mode combinations according to the first charge efficiency, and performing charging processing by using the target charging mode combination (S240).

## Description

### CROSS-REFERENCE TO RELATED APPLICATION

This application is filed on the basis of Chinese Patent Application No. 202111412944.6, filed on November 25, 2021, and claims priority to the Chinese Patent Application, the entire contents of which are incorporated herein by reference.

### TECHNICAL FIELD

The present disclosure relates to the techinical field of charging, and more particularly, to a charging control method, a controller, a charging terminal, and a readable storage medium.

### BACKGROUND

In the field of charging technology, to improve a charging power and a charging efficiency, a charge pump is generally used as a charging chip for fast charging. The charge pump can reduce the voltage value to half the original voltage value, and increase the current to twice the original current, thereby charging at higher power. Additionally, if a head of one of two cells in the battery is connected to a tail of the other cell, the charging voltage may be further increased during charging, and thus a higher charging power can be obtained under a fixed charging current.

However, in a charging method in the existing technology, the charging mode is relatively rigid, which can lead to frequent charging faultsduring the charging process. Consequently, this can damage the battery of the charging terminal, or result in low charging efficiency, leading to a poor user experience.

### SUMMARY

The following is a summary of the subject matter set forth in this description. This summary is not intended to limit the scope of protection of the claims.

Embodiments of the present disclosure provide a charging control method, a controller, a charging terminal, and a readable storage medium.

In accordance with a first aspect of the present disclosure, an embodiment provides a charging control method, applied to a charging terminal, including: acquiring an output capability parameter of a charger and a battery input capability parameter of the charging terminal; obtaining a first charging power by comparing the output capability parameter with the battery input capability parameter; acquiring a second charging power of each of a plurality of charging mode combinations of the charging terminal, the charging mode combination includes a battery connection mode and a charging chip operating mode; selecting several candidate charging mode combinations from the plurality of charging mode combinations by comparing the first charging power with the second charging power; and acquiring a first charging efficiency of each of the candidate charging mode combinations, determining a target charging mode combination from the several candidate charging mode combinations according to the first charging efficiency, and performing charging using the target charging mode combination.

In accordance with a second aspect of the present disclosure, an embodiment provides a controller, including a memory, a processor, and a computer program stored in the memory and running on the processor, the computer program, when executed by the processor, causes the processor to implement the charging control method of the first aspect.

In accordance with a third aspect of the present disclosure, an embodiment provides a charging terminal, including the controller of the second aspect.

In accordance with a fourth aspect of the present disclosure, an embodiment provides a computer-readable storage medium, storing a computer-executable instruction which, when executed by a processor, causes the processor to implement the charging control method of the first aspect.

Additional features and advantages of the technical schemes of the present disclosure will be set forth in the description which follows, and in part will be apparent from the description, or may be learned by the practice of the present disclosure. The objects and other advantages of the technical schemes of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is a schematic diagram of a system architecture platform used for executing a charging control method according to an embodiment of the present disclosure;
FIG. 2 is a flowchart of a charging control method according to an embodiment of the present disclosure;
FIG. 3 is a flowchart of a charging control method according to another embodiment of the present disclosure;
FIG. 4 is a flowchart of a charging control method according to another embodiment of the present disclosure;
FIG. 5 is a flowchart of a charging control method according to another embodiment of the present disclosure;
FIG. 6 is a flowchart of a charging control method according to another embodiment of the present disclosure;
FIG. 7 is a flowchart of a charging control method according to another embodiment of the present disclosure;
FIG. 8 is a flowchart of a charging control method according to another embodiment of the present disclosure;
FIG. 9 is a flowchart of a charging control method according to another embodiment of the present disclosure;
FIG. 10 is a flowchart of a charging control method according to another embodiment of the present disclosure;
FIG. 11 is a flowchart of a charging control method according to another embodiment of the present disclosure;
FIG. 12 is an overall schematic diagram of a charging chip operating mode and a battery connection mode according to an embodiment of the present disclosure; and
FIG. 13 is an overall flowchart of a charging control method according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It should be understood that in the description of the embodiments of the present disclosure, the term "at least one" means one or more, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second", and the like are merely used for distinguishing technical features, and are not intended to indicate or imply relative importance, or implicitly point out the number of the indicated technical features, or implicitly point out the precedence order of the indicated technical features.

In the description of the embodiments of the present disclosure, unless otherwise explicitly defined, the terms such as "configure", "install/mount" and "connect" should be understood in a broad sense, and those having ordinary skills in the art can reasonably determine the specific meanings of the above terms in the embodiments of the present disclosure based on the specific contents of the technical schemes.

In the field of charging, to improve a charging power and a charging efficiency, a charge pump is generally used as a charging chip for fast charging. The charge pump can reduce a voltage value to half the original voltage value, and increase a current to twice the original current. In this way, charging with a higher power can be achieved. Further, if a head of one of the two cells in a battery is connected to a tail of the other cell, a charging voltage may be further increased during charging, and thus a higher charging power can be obtained under a fixed charging current.

In a charging method in the existing technology, because a charging mode is quite fixed, a charging fault is likely to occur in a charging process, leading to damage of a battery of a charging terminal, or a charging efficiency is low, leading to unsatisfactory user experience.

In view of the fact that the charging mode is quite fixed, a charging fault is likely to occur in the charging process, leading to damage of the charging terminal battery, or the charging efficiency is low, leading to unsatisfactory user experience, embodiments of the present disclosure provide a charging control method, a controller, a charging terminal, and a readable storage medium. The charging terminal acquires an output capability parameter of a charger and a battery input capability parameter of the charging terminal, and compares the acquired output capability parameter of the charger with the acquired battery input capability parameter of the charging terminal, to obtain a first charging power during charging. Because the charging terminal has a plurality of charging chip operating modes and a battery of the charging terminal also has a plurality of battery connection modes, the plurality of charging chip operating modes and the plurality of battery connection modes may be combined in a one-to-one manner, to obtain several charging mode combinations. In addition, a second charging power of the several charging mode combinations is acquired, and the first charging power is compared with the second charging power, to select a charging mode combination from the several charging mode combinations. In this way, a low charging efficiency caused due to the fact that an input power requested by the charging terminal is greater than an output power of the charger, or unnecessary loss caused to the battery due to the fact that the output power of the charger is greater than a maximum input power that the battery of the charging terminal can withstand, can be prevented. The selected charging mode combination is used as a candidate charging mode combination to perform charging efficiency calculation, so as to obtain first charging efficiencies of different candidate charging mode combinations, and the different first charging efficiencies are compared with each other, to select a candidate mode combination with a highest charging efficiency as a target charging mode combination to perform charging. In this way, most efficient charging is performed while ensuring security of the charging, and an overall charging effect of the charging terminal is greatly improved, thereby enhancing user experience.

The following describes embodiments of the present disclosure in conjunction with the accompanying drawings.

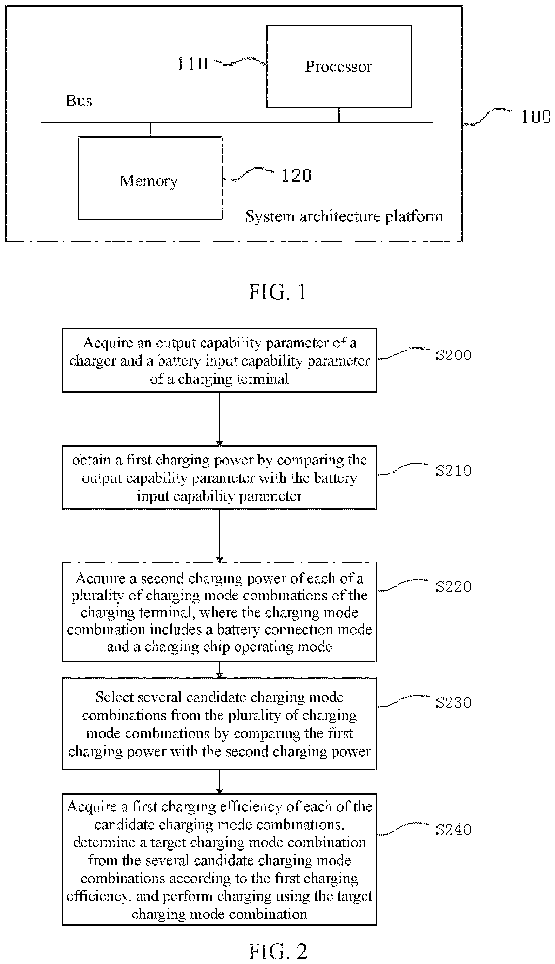

As shown in FIG. 1, FIG. 1 is a schematic diagram of a system architecture platform used for executing a charging control method according to an embodiment of the present disclosure.

The system architecture platform 100 in this embodiment of the present disclosure includes one or more processors 110 and a memory 120. In FIG. 1, one processor 110 and one memory 120 are used as an example.

The processor 110 and the memory 120 may be connected by a bus or in another manner. In FIG. 1, connection by a bus is used as an example.

As a non-transient computer-readable storage medium, the memory 120 may be configured to store a non-transient software program and a non-transient computer-executable program. In addition, the memory 120 may include a high-speed Random Access Memory (RAM), and may further include a non-transient memory, such as at least one magnetic disk storage device, a flash memory device, or other non-transient solid-state storage devices. In some implementations, the memory 120 may optionally include a memory 120 remotely located relative to the processor 110, which may be connected to the system architecture platform 100 by a network. Examples of the foregoing network include but are not limited to the Internet, an intranet, a Local Area Network (LAN), a mobile communications network, and a combination thereof.

Those having ordinary skills in the art may understand that the apparatus structure shown in FIG. 1 does not constitute a limitation to the system architecture platform 100, and may include more or fewer components than those shown in the figure, or a combination of certain components, or a different arrangement of components..

In the system architecture platform 100 shown in FIG. 1, the processor 110 may be configured to invoke a control program stored in the memory 120, so as to implement a charging control method.

FIG. 2 is a flowchart of a charging control method according to an embodiment of the present disclosure. The charging control method in this embodiment of the present disclosure is applied to a charging terminal. As shown in FIG. 2, the charging control method includes, but not limited to, the following S200, S210, S220, S230, and S240.

At S200, an output capability parameter of a charger and a battery input capability parameter of the charging terminal are acquired.

At S210, a first charging power is obtained by comparing the output capability parameter with the battery input capability parameter.

At S220, a second charging power of each charging mode combination of the charging terminal is acquired, the charging mode combination includes a battery connection mode and a charging chip operating mode.

At S230, the first charging power is compared with the second charging power, and several candidate charging mode combinations are selected from a plurality of charging mode combinations.

At S240, a first charging efficiency of each of the candidate charging mode combinations is acquired, a target charging mode combination is determined from the several candidate charging mode combinations according to the first charging efficiencies, and charging is performed using the target charging mode combination.

In this embodiment of the present disclosure, a charging terminal acquires an output capability parameter of a charger and a battery input capability parameter of the charging terminal in a charging preparation phase, obtain a first charging power by comparing the output capability parameter of the charger with the battery input capability parameter of the charging terminal. Because the charging terminal has a plurality of charging chip operating modes and a battery of the charging terminal also has a plurality of battery connection modes, the plurality of charging chip operating modes and the plurality of battery connection modes may be combined in a one-to-one manner, to obtain several charging mode combinations. In addition, a second charging power of each of the several charging mode combinations is acquired, and the first charging power is compared with the second charging power, to select a charging mode combination from the several charging mode combinations. In this way, a low charging efficiency caused due to the fact that an input power requested by the charging terminal is greater than an output power of the charger, which leads to a reduced charging speed and affects user experience, or unnecessary loss caused to the battery due to the fact that the output power of the charger is greater than a maximum input power that the battery of the charging terminal can withstand, can be prevented. The selected charging mode combination is used as a candidate charging mode combination to perform charging efficiency calculation, so as to obtain first charging efficiencies of different candidate charging mode combinations, and the different first charging efficiencies are compared with each other, to select a candidate mode combination with a highest charging efficiency as a target charging mode combination to perform charging. In this way, most efficient charging is performed while ensuring security of the charging, and an overall charging effect of the charging terminal is greatly improved, thereby enhancing user experience.

It should be noted that a formula for the foregoing charging efficiency calculation is a function involving a charging current, a battery voltage, and a battery temperature, that is, *Effect*=*F(fcc, voltage, temp),* where Effect is the charging efficiency, FCC is the charging current, voltage is the battery voltage, and temp is the battery temperature.

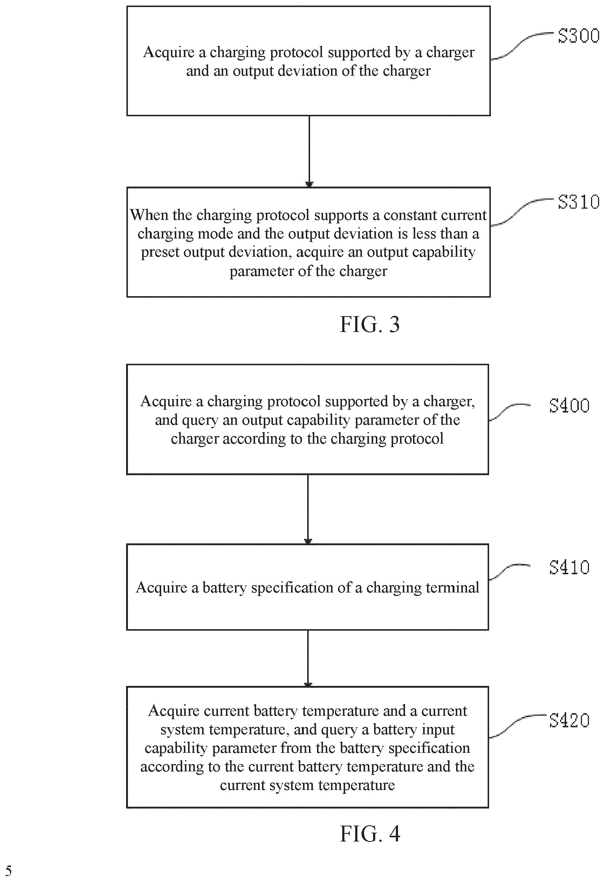

FIG. 3 is a flowchart of a charging control method according to another embodiment of the present disclosure. As shown in FIG. 3, the charging control method in this embodiment of the present disclosure includes, but not limited to, the following steps S300 and S310.

At S300, a charging protocol supported by a charger and an output deviation of the charger are acquired.

At S310, when the charging protocol supports a constant current charging mode and the output deviation is less than a preset output deviation, an output capability parameter of the charger is acquired.

In this embodiment, in the charging control method provided in the present disclosure, the charging protocol of the charger needs to support the constant current charging mode. Therefore, the charging protocol supported by the charger needs to be acquired, and whether the charging protocol supported by the charger supports the constant current charging mode may need to be determined. Similarly, in a charging process, for precise control of a charging power, the output deviation of the charger should not be greater than the preset output deviation. Therefore, the output capability parameter of the charger is acquired only when the charging protocol of the charger supports the constant current charging mode and the output deviation of the charger is less than the preset output deviation.

It should be noted that the charging protocol that supports the constant current charging mode includes, but not limited to, a Power Delivery (PD) protocol and a Programmable Power Supply (PPS) protocol.

In addition, it should be noted that the foregoing output deviation is a deviation between a charging current requested by the charging terminal and an output current of the charger.

FIG. 4 is a flowchart of a charging control method according to another embodiment of the present disclosure. As shown in FIG. 4, the charging control method in this embodiment of the present disclosure includes, but not limited to, the following steps S400, S410, and S420.

At S400, a charging protocol supported by a charger is acquired, and an output capability parameter of the charger is queried according to the charging protocol.

At S410, a battery specification of a charging terminal is acquired.

At S420, a current battery temperature and a current system temperature are acquired, and a battery input capability parameter is queried from the battery specification according to the current battery temperature and the current system temperature.

In this embodiment, a charging protocol supported by a charger is acquired, and an output capability parameter of the charger can be obtained according to the charging protocol. A battery specification of a charging terminal, a current battery temperature, and a current system temperature are acquired, and then a battery input capability parameter can be obtained. The output capability parameter of the charger and the battery input capability parameter can be obtained directly by acquiring the charging protocol, the battery specification, the battery temperature, and the system temperature. This reduces data processing burden of the charging terminal, and improves an overall processing speed of the charging terminal. Therefore, corresponding adjustment can be made in a more timely manner, and a charging effect of the charging terminal is improved.

It should be noted that the battery specification includes a correspondence between the battery temperature, the system temperature, and the battery input capability parameter. Based on the acquired current battery temperature and the current system temperature, a battery input capability parameter in a current situation is queried according to the correspondence between the battery temperature, the system temperature, and the battery input capability parameter in the battery specification.

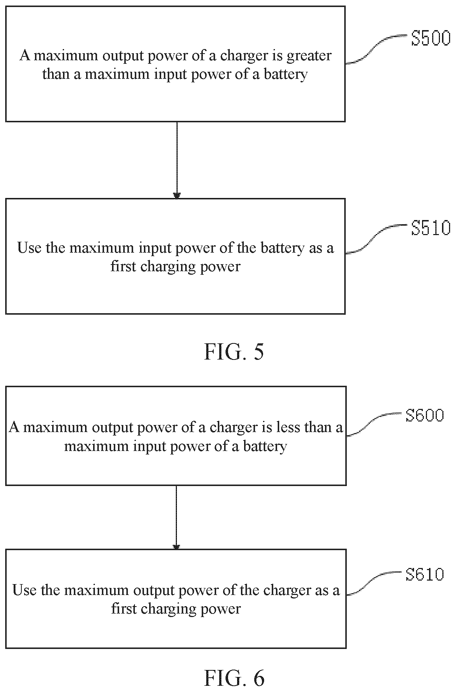

FIG. 5 is a flowchart of a charging control method according to another embodiment of the present disclosure. As shown in FIG. 5, the charging control method in this embodiment of the present disclosure includes, but not limited to, the following steps S500 and S510.

At S500, a maximum output power of a charger is greater than a maximum input power of a battery.

At S510, the maximum input power of the battery is used as a first charging power.

In this embodiment, an output capability parameter of a charger includes a maximum output power of the charger, and a battery input capability parameter includes a maximum input power of a battery. The output capability parameter of the charger is compared with the battery input capability parameter to obtain a first charging power, that is, the maximum output power of the charger is compared with the maximum input power of the battery to obtain the first charging power. When the maximum output power of the charger is greater than the maximum input power of the battery, the maximum input power of the battery is selected as the first charging power. This ensures that a charging power that is input into the battery is within an endurance range of the battery, thereby avoiding unnecessary loss of the battery, improving a service life of the battery, and enhancing user experience.

FIG. 6 is a flowchart of a charging control method according to another embodiment of the present disclosure. As shown in FIG. 6, the charging control method in this embodiment of the present disclosure includes, but not limited to, the following steps S600 and S610.

At S600, a maximum output power of a charger is less than a maximum input power of a battery.

At S610, the maximum output power of the charger is used as a first charging power.

In this embodiment, an output capability parameter of a charger includes a maximum output power of the charger, and a battery input capability parameter includes a maximum input power of a battery. The output capability parameter of the charger is compared with the battery input capability parameter to obtain a first charging power, that is, the maximum output power of the charger is compared with the maximum input power of the battery to obtain the first charging power. When the maximum output power of the charger is less than the maximum input power of the battery, the maximum output power of the charger is selected as the first charging power. This ensures that the use of the charger is maximized, and a situation where the charger is consistently charging at a low output power, thus slowing down the charging speed and affecting user experience avoided.

In addition, in another embodiment of the present disclosure, an output capability parameter of a charger includes a maximum output power of the charger, and a battery input capability parameter includes a maximum input power of a battery. The output capability parameter of the charger is compared with the battery input capability parameter to obtain a first charging power, that is, the maximum output power of the charger is compared with the maximum input power of the battery to obtain the first charging power. When the maximum output power of the charger is equal to the maximum input power of the battery, the maximum output power of the charger or the maximum input power of the battery is selected as the first charging power. This ensures that the use of the charger is maximized, and a situation where the charger is consistently charging at a low output power, thus slowing down the charging speed and affecting the user experience is avoided. In addition, it can be ensured that a charging power that is input into the battery is within an endurance range of the battery, thereby avoiding unnecessary loss of the battery, improving a service life of the battery, and enhancing user experience.

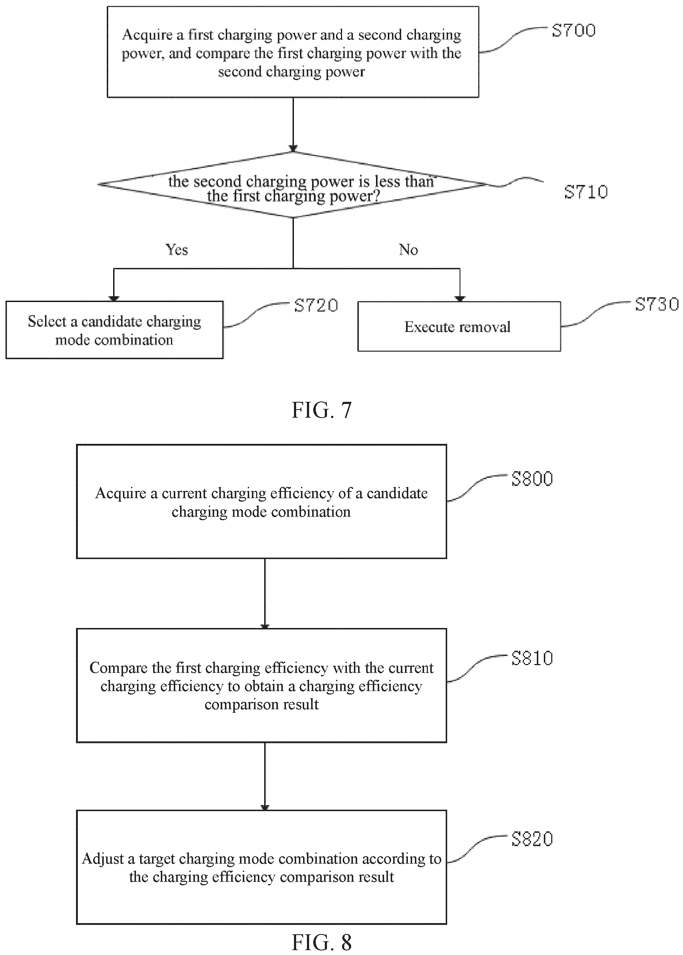

FIG. 7 is a flowchart of a charging control method according to another embodiment of the present disclosure. As shown in FIG. 7, the charging control method in this embodiment of the present disclosure includes, but not limited to, the following steps S700, S710, S720, and S730.

At S700, a first charging power and a second charging power are acquired, and the first charging power is compared with the second charging power.

At S710, whether the second charging power is less than the first charging power is determined, and if yes, S720 is executed; otherwise, S730 is executed.

At S720, a candidate charging mode combination is selected.

At S730, removal is executed.

In this embodiment, for details on how to acquire the first charging power, reference may be made to the steps shown in FIG. 5 or FIG. 6. To obtain the second charging power, charging chip operating modes and battery connection modes of a charging terminal are traversed, the charging chip operating modes and the battery connection modes are combined in a one-to-one manner, to obtain a plurality of charging mode combinations, and then power calculation is performed on the plurality of charging mode combinations. The first charging power is compared with the second charging power, to determine whether the second charging power is less than the first charging power. If the second charging power is less than the first charging power, a corresponding charging mode combination is selected as the candidate charging mode combination. If the second charging power is greater than the first charging power, the corresponding charging mode combination is removed.

It should be noted that, in this embodiment, the first charging power represents a maximum allowable charging power. When a second charging power of a charging mode combination is greater than the first charging power, it indicates that the charging mode combination cannot exert its maximum effect, which causes a unsatisfactory charging effect and affects user experience. In addition, there is a risk of causing unnecessary loss to the battery. When the second power of the charging mode combination is less than the first charging power, it indicates that the charging mode combination can exert its maximum effect, thereby improving a charging effect and enhancing user experience.

FIG. 8 is a flowchart of a charging control method according to another embodiment of the present disclosure. As shown in FIG. 8, the charging control method in this embodiment of the present disclosure includes, but not limited to, the following steps S800, S810, and S820.

At S800, a current charging efficiency of a candidate charging mode combination is acquired.

At S810, the first charging efficiency is compared with the current charging efficiency to obtain a charging efficiency comparison result.

At S820, a target charging mode combination is adjusted according to the charging efficiency comparison result.

In this embodiment, in the charging process, a charging efficiency of the candidate charging mode combination changes as parameters related to the charging change. Therefore, in the charging process, the candidate charging mode combination may need to be continuously calculated to continuously re-acquire a current charging efficiency of the candidate charging mode combination, the current charging efficiency is compared with the first charging efficiency to obtain a charging efficiency comparison result, and the target charging mode combination is adjusted according to the charging efficiency comparison result. In this way, it is ensured that a charging efficiency of the target charging mode combination is the highest, which improves a charging effect of the charging terminal, and enhances user experience.

It should be noted that in this embodiment, a formula for calculating the foregoing current charging efficiency and the foregoing first charging efficiency is a function involving a charging current, a battery voltage, and a battery temperature, that is, *Effect=F(fcc, voltage, temp),* where Effect is the charging efficiency, FCC is the charging current, voltage is the battery voltage, and temp is the battery temperature.

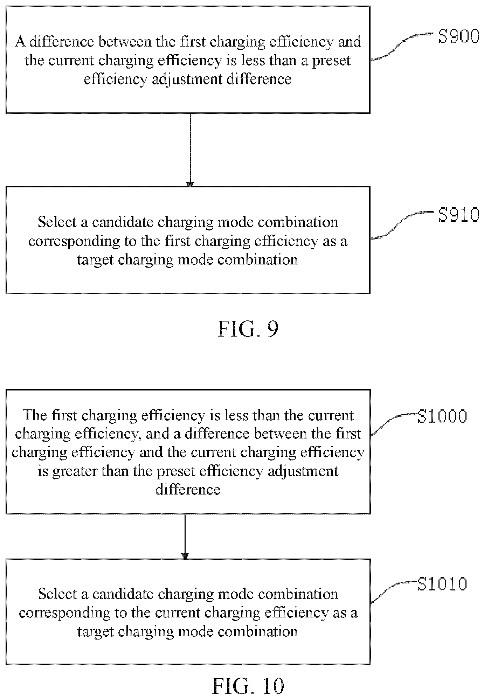

FIG. 9 is a flowchart of a charging control method according to another embodiment of the present disclosure. As shown in FIG. 9, the charging control method in this embodiment of the present disclosure includes, but not limited to, the following steps S900 and S910.

At S900, a difference between the first charging efficiency and the current charging efficiency is less than a preset efficiency adjustment difference.

At S910, a candidate charging mode combination corresponding to the first charging efficiency is selected as a target charging mode combination.

In this embodiment, in the charging process, a charging efficiency of the candidate charging mode combination changes as parameters related to the charging change. Therefore, in the charging process, the candidate charging mode combination may need to be continuously calculated, to continuously re-acquire a current charging efficiency of the candidate charging mode combination, the current charging efficiency is compared with the first charging efficiency to obtain a charging efficiency comparison result, and the target charging mode combination is adjusted according to the charging efficiency comparison result.

When the difference between the first charging efficiency and the current charging efficiency is less than the preset efficiency adjustment difference, in order to avoid a ping-pong effect, the candidate charging mode combination corresponding to the first charging efficiency is selected as the target charging mode combination. In this way, it is ensured that a charging efficiency of the target charging mode combination is the highest, which improves a charging effect of the charging terminal, and enhances user experience.

It should be noted that in this embodiment, a formula for calculating the foregoing current charging efficiency and the foregoing first charging efficiency is a function involving a charging current, a battery voltage, and a battery temperature, that is, *Effect*=*F(fcc,voltage, temp),* where Effect is the charging efficiency, FCC is the charging current, voltage is the battery voltage, and temp is the battery temperature.

FIG. 10 is a flowchart of a charging control method according to another embodiment of the present disclosure. As shown in FIG. 10, the charging control method in this embodiment of the present disclosure includes, but not limited to, the following steps S1000 and S 1010.

At S 1000, the first charging efficiency is less than the current charging efficiency, and a difference between the first charging efficiency and the current charging efficiency is greater than the preset efficiency adjustment difference.

At S 1010, a candidate charging mode combination corresponding to the current charging efficiency is selected as a target charging mode combination.

In this embodiment, in the charging process, a charging efficiency of the candidate charging mode combination changes as parameters related to the charging change. Therefore, in the charging process, the candidate charging mode combination may need to be continuously calculated, to continuously re-acquire a current charging efficiency of the candidate charging mode combination, the current charging efficiency is compared with the first charging efficiency to obtain a charging efficiency comparison result, and the target charging mode combination is adjusted according to the charging efficiency comparison result.

When the first charging efficiency is less than the current charging efficiency and the difference between the first charging efficiency and the current charging efficiency is greater than the preset efficiency adjustment difference, the candidate charging mode combination corresponding to the current charging efficiency is selected as the target charging mode combination. It is necessary to select the candidate charging mode combination corresponding to the current charging efficiency as the target charging mode combination only when the first charging efficiency is less than the current charging efficiency. To prevent a ping-pong effect, the difference between the first charging efficiency and the current charging efficiency may need to be greater than the preset efficiency adjustment difference. In this way, it is ensured that a charging efficiency of the target charging mode combination is the highest, which improves a charging effect of the charging terminal, and enhances user experience.

It should be noted that in this embodiment, a formula for calculating the foregoing current charging efficiency and the foregoing first charging efficiency is a function involving a charging current, a battery voltage, and a battery temperature, that is, *Effect*=*F(fcc,voltage, temp),* where Effect is the charging efficiency, FCC is the charging current, voltage is the battery voltage, and temp is the battery temperature.

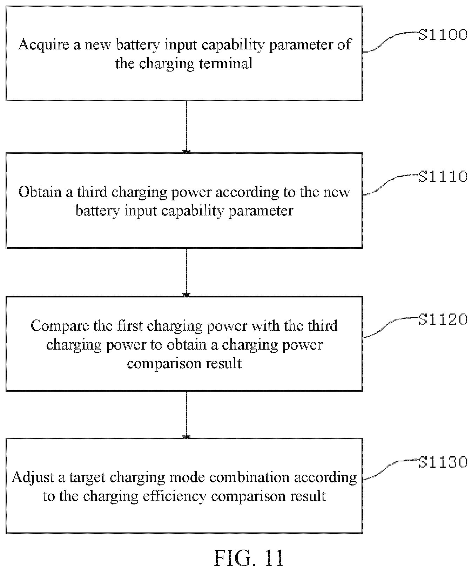

FIG. 11 is a flowchart of a charging control method according to another embodiment of the present disclosure. As shown in FIG. 11, the charging control method in this embodiment of the present disclosure includes, but not limited to, the following steps S1100 to S1130.

At S 1100, a new battery input capability parameter of the charging terminal is acquired.

At S1110, a third charging power is obtained according to the new battery input capability parameter.

At S1120, the first charging power is compared with the third charging power to obtain a charging power comparison result.

At S1130, a target charging mode combination is adjusted according to the charging power comparison result.

In this embodiment, in the charging process, a maximum current allowed after a voltage of a battery reaches a certain level may decrease, and a maximum current allowed by an excessively high temperature or an excessively low temperature may also need to be limited. In this case, a battery input capability parameter also changes. Therefore, a new battery input capability parameter of the charging terminal may need to be obtained. Referring to the embodiments provided in FIG. 4, FIG. 5, and FIG. 6, the third charging power is obtained according to the new battery input capability parameter, the third charging power is compared with the first charging power to obtain a charging power comparison result, and the target charging mode combination is adjusted according to the comparison result. In the charging process, a new battery input capability parameter is continuously obtained, so as to obtain a new charging power, and then the target charging mode combination is adjusted according to the charging power comparison result. Therefore, the charging terminal is charged in a reasonable and safe mode, which improves a charging effect of the charging terminal and enhances user experience.

In this embodiment, that the first charging power is greater than the newly acquired third charging power, and correspondingly the target charging mode combination may need to be adjusted includes: acquiring a new second charging power of each charging mode combination of the charging terminal, where each charging mode combination includes a battery mode and an input mode; comparing the third charging power with the new second charging power, and selecting several candidate charging mode combinations from the plurality of charging mode combinations; and acquiring a second charging efficiency of each of the candidate charging mode combinations, determining the target charging mode combination from the several candidate charging mode combinations according to the second charging efficiency, and performing charging using the target charging mode combination. A plurality of charging chip operating modes and a plurality of battery connection modes may be combined in a one-to-one manner, to obtain several charging mode combinations. A second charging power of each of the several charging mode combinations is acquired, and the third charging power is compared with the new second charging power, to select a target charging mode combination from the several charging mode combinations. In this way, a low charging efficiency caused due to the fact that an input power requested by the charging terminal is greater than an output power of the charger, which leads to a reduced charging speed and affects user experience, or unnecessary loss caused to the battery due to the fact that the output power of the charger is greater than a maximum input power that the battery of the charging terminal can withstand, can be prevented. The selected charging mode combination is used as a candidate charging mode combination to perform charging efficiency calculation, so as to obtain first charging efficiencies of different candidate charging mode combinations, and the different first charging efficiencies are compared with each other, to select a candidate mode combination with a highest charging efficiency as a target charging mode combination to perform charging. In this way, most efficient charging is performed while ensuring security of the charging, and an overall charging effect of the charging terminal is greatly improved, thereby enhancing user experience.

It should be noted that a formula for the foregoing charging efficiency calculation is a function involving a charging current, a battery voltage, and a battery temperature, that is, *Effect*=*F(fcc, voltage, temp),* where Effect is the charging efficiency, FCC is the charging current, voltage is the battery voltage, and temp is the battery temperature.

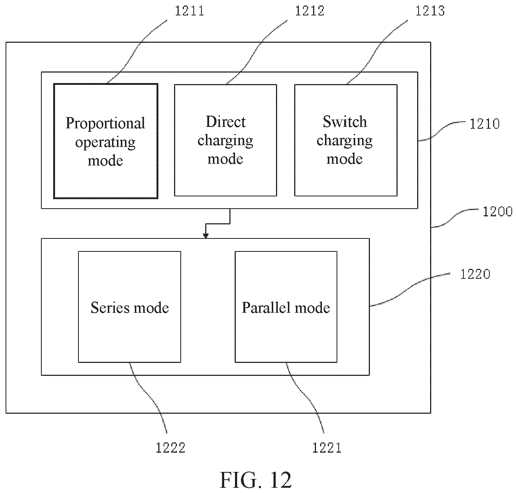

FIG. 12 is a schematic diagram of a charging chip operating mode and a battery connection mode according to an embodiment of the present disclosure. As shown in FIG. 12, an upper half shows the charging chip operating mode 1210, and the charging chip operating mode 1210 includes, but not limited to, a proportional operating mode 1211, a direct charging mode 1212, and a switch charging mode 1213. A charging chip may operate in the proportional work mode 1211, the direct charging mode 1212, or the switch charging mode 1213. Selection of an actual charging efficiency of different charging chip operating mode 1210 may need to be determined according to hardware design and component selection. For example, if the direct charging mode 1212 is implemented using a charging chip, the charging efficiency may be about 96%. If there is a direct charging path, the charging efficiency may be higher. A lower part shows the battery connection mode 1220, and the battery connection mode 1220 includes, but not limited to, a series mode 1222 and a parallel mode 1221. For a battery with series-parallel connection, the series mode 1222 may be selected when high-power charging is performed, since higher charging power can be achieved with the same current due to the increased charging voltage, while the parallel mode 1221 may be selected if a maximum charging power is not required. In this way, an overall charging efficiency is maximized while meeting charging power requirements.

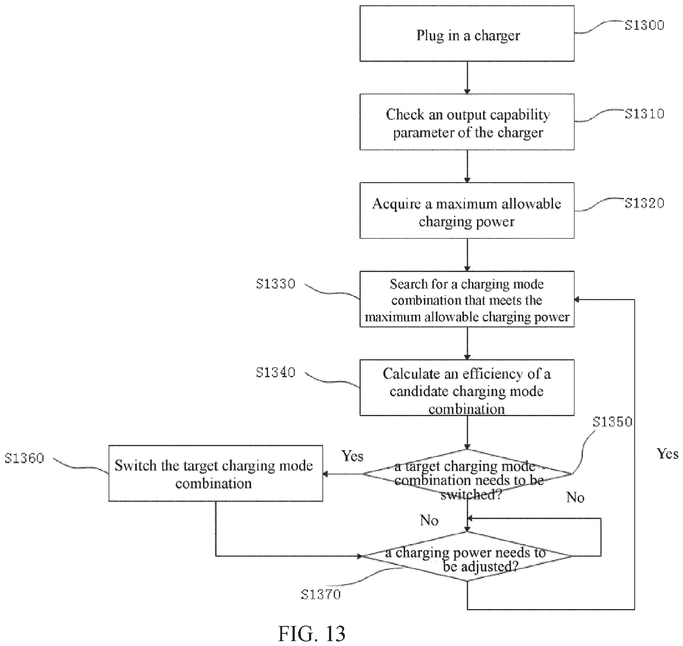

FIG. 13 is an overall flowchart of a charging control method according to an embodiment of the present disclosure. As shown in FIG. 13, the charging control method in this embodiment of the present disclosure includes, but not limited to, the following steps S1300 to S1370.

At S1300, a charger is plugged in.

At S1310, an output capability parameter of the charger is checked.

At S1320, a maximum allowable charging power is acquired.

At S1330, a charging mode combination that meets the maximum allowable charging power is searched for.

At S1340, an efficiency of a candidate charging mode combination is calculated.

At S1350, whether a target charging mode combination needs to be switched is determined, and if yes, S1360 is executed; otherwise, S1370 is executed.

At S1360, the target charging mode combination is switched.

At S1370, whether a charging power needs to be adjusted is determined, and if yes, S1330 is executed; otherwise, S1370 is cyclically executed.

In this embodiment, after a charger is plugged in, a charging process starts and then a capability of the charger is checked. To facilitate switching of all charging chip operating modes, the charger may need to support a constant current charging mode. A method for detecting the constant current charging mode is that the charger may need to support the PD protocol or the PPS charging protocol, and a difference between a requested current and an actual output current is within an allowed range. If the charger meets the conditions, a next step is executed, otherwise, the process ends. Then, a maximum allowable charging power is acquired, which may need to be determined by both an output capability parameter of the charger and a battery input capability parameter. The output capability parameter of the charger can be directly obtained using a charging protocol. The battery input capability parameter may need to be determined according to a battery specification, a current battery temperature, and a system temperature. Herein, a maximum current value that is currently allowed to enter a battery can be obtained. Then, according to a hardware design scheme of the charging terminal, various charging mode combinations supported by a charging terminal are traversed, to obtain all candidate charging mode combinations that meet a current maximum allowable charging power. Some charging mode combinations may have a high charging efficiency, but cannot reach such a high charging power, and therefore are removed. Then, charging efficiencies of all candidate charging mode combinations that meet the current maximum allowable charging power are calculated, and the charging efficiencies are obtained by means of calculation according to the formula *Effect*=*F(fcc*,*voltage*,*temp).* The formula may also be simplified as involving only a current charging current. A candidate charging mode combination with a highest efficiency is selected as a target charging mode combination to perform charging. In the charging process, whether the currently selected target charging mode combination is the same as a candidate charging mode combination currently with a highest charging efficiency, and whether the target charging mode combination may need to be switched are determined. If they are different, the target charging mode combination may need to be switched; if they are the same, a next step is executed. It should be noted that, to avoid a ping-pong effect, it may be required that the target charging mode combination be switched only when an efficiency difference between the currently selected target charging mode combination and the candidate charging mode combination currently with the highest charging efficiency is greater than a preset efficiency adjustment difference. Finally, whether the current maximum allowable charging power needs to be adjusted may need to be determined. According to the battery specification, a maximum current allowed by the battery after a charging voltage reaches a certain level may decrease, and a maximum current allowed by an excessively high temperature or an excessively low temperature may also needs to be limited. If the current maximum allowable charging power does not change, the current step is cyclically executed to determine continuously. Otherwise, a candidate charging mode combination that meets a condition under a new maximum allowable charging power is searched for, and a new target charging mode combination is reselected.

It should be noted that a formula for calculating the foregoing charging efficiency is a function involving a charging current, a battery voltage, and a battery temperature, that is, *Effect*=*F(fcc, voltage, temp),* where Effect is the charging efficiency, FCC is the charging current, voltage is the battery voltage, and temp is the battery temperature. The formula may also be simplified as involving only a current charging current.

Based on the foregoing charging control method, embodiments of the controller, the charging terminal, and the computer-readable storage medium in the present disclosure are provided below.

Further, an embodiment of the present disclosure provides a controller, including a processor, a memory, and a computer program stored in the memory and executable by the processor.

The processor and the memory may be connected by a bus or in another manner.

It should be noted that the controller in this embodiment may include the processor and the memory in the embodiment shown in FIG. 1, both of which belong to the same idea, and thus have the same implementation principle and beneficial effect. Therefore, details are not repeated herein.

A non-transient software program and an instruction that are required to implement a method for controlling the charging terminal in the foregoing embodiments are stored in a memory which, when executed by a processor, cause the processor to implement the method for controlling the charging terminal in the foregoing embodiments.

It should be noted that the controller in this embodiment of the present disclosure can execute the method for controlling the charging terminal in the foregoing embodiments. Therefore, for a specific implementation and a technical effect of the controller in this embodiment of the present disclosure, reference may be made to a specific implementation and a technical effect of the charging control method in any one of the foregoing embodiments.

Further, an embodiment of the present disclosure provides a charging terminal, including the foregoing controller.

It should be noted that the charging terminal in this embodiment of the present disclosure has the controller in the foregoing embodiment, and the controller in the foregoing embodiment can execute the charging control method in the foregoing embodiments. Therefore, for a specific implementation and a technical effect of the charging terminal in this embodiment of the present disclosure, reference may be made to a specific implementation and a technical effect of the method for controlling the charging terminal in any one of the foregoing embodiments.

Further, the foregoing charging terminal further includes a battery, a charging chip, and a battery chip. The battery of the charging terminal has at least two cells, which can greatly improve a charging speed and enhance user experience. The charging chip is configured to control switching of a charging chip operating mode. The battery chip is electrically connected to the battery, and is configured to acquire a battery input capability parameter of the charging terminal and control switching of a battery connection mode.

Further, an embodiment of the present disclosure provides a computer-readable storage medium, storing a computer-executable instruction which, when executed by a processor or a controller, for example, by the processor in the foregoing controller embodiment, causes the processor to implement the charging control method in the foregoing embodiments, for example, implement the method steps S200 to S240 in FIG. 2, the method steps S300 and S310 in FIG. 3, the method steps S400 to S420 in FIG. 4, the method steps S500 to S510 in FIG. 5, the method steps S600 to S610 in FIG. 6, the method steps S700 to S730 in FIG. 7, the method steps S800 to S820 in FIG. 8, the method steps S900 to S910 in FIG. 9, the method steps S1000 to S1010 in FIG. 10, the method steps S1100 to S1130 in FIG. 11, or the method steps S1300 to S1370 in FIG. 13.

An embodiment of the present disclosure provides a charging control method, applied to a charging terminal, the method including: acquiring an output capability parameter of a charger and a battery input capability parameter of the charging terminal; obtaining a first charging power by comparing the output capability parameter with the battery input capability parameter; acquiring a second charging power of each charging mode combination of the charging terminal, where the charging mode combination includes a battery connection mode and a charging chip operating mode; selecting several candidate charging mode combinations from the plurality of charging mode combinations by comparing the first charging power with the second charging power; and acquiring a first charging efficiency of each of the candidate charging mode combinations, determining a target charging mode combination from the several candidate charging mode combinations according to the first charging efficiencies, and performing charging using the target charging mode combination. According to the scheme provided in this embodiment of the present disclosure, a charging terminal acquires an output capability parameter of a charger and a battery input capability parameter of the charging terminal, and compares the acquired output capability parameter of the charger with the acquired battery input capability parameter of the charging terminal, to obtain a first charging power during charging. Because the charging terminal has a plurality of charging chip operating modes and a battery of the charging terminal also has a plurality of battery connection modes, the plurality of charging chip operating modes and the plurality of battery connection modes may be combined in a one-to-one manner, to obtain several charging mode combinations. In addition, a second charging power of the several charging mode combinations is acquired, and the first charging power is compared with the second charging power, to select a charging mode combination from the several charging mode combinations. In this way, a low charging efficiency caused due to the fact that an input power requested by the charging terminal is greater than an output power of the charger, which leads to a reduced charging speed and affects user experience, or unnecessary loss caused to the battery due to the fact that the output power of the charger is greater than a maximum input power that the battery of the charging terminal can withstand, can be prevented. The selected charging mode combination is used as a candidate charging mode combination to perform charging efficiency calculation, so as to obtain first charging efficiencies of different candidate charging mode combinations, and the different first charging efficiencies are compared with each other, to select a candidate mode combination with a highest charging efficiency as a target charging mode combination to perform charging. In this way, most efficient charging is performed while ensuring security of the charging, and an overall charging effect of the charging terminal is greatly improved, thereby enhancing user experience.

Those having ordinary skills in the art can understand that all or some of the steps in the methods disclosed above and the functional modules/units in the system and the apparatus may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a RAM, a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the protection scope defined by the claims of the present disclosure.

## Claims

1. A charging control method, applied to a charging terminal, comprising:
acquiring an output capability parameter of a charger and a battery input capability parameter of the charging terminal;
obtaining a first charging power by comparing the output capability parameter with the battery input capability parameter;
acquiring a second charging power of each of a plurality of charging mode combinations of the charging terminal, wherein the charging mode combination comprises a battery connection mode and a charging chip operating mode;
selecting several candidate charging mode combinations from the plurality of charging mode combinations by comparing the first charging power with the second charging power; and
acquiring a first charging efficiency of each of the candidate charging mode combinations, determining a target charging mode combination from the several candidate charging mode combinations according to the first charging efficiency, and performing charging using the target charging mode combination.

2. The charging control method of claim 1, wherein acquiring an output capability parameter of a charger comprises:
acquiring a charging protocol supported by the charger and an output deviation of the charger, wherein the output deviation is a deviation between a charging current requested by the charging terminal and an output current of the charger; and
in response to the charging protocol supporting a constant current charging mode and the output deviation being less than a preset output deviation, acquiring the output capability parameter of the charger.

3. The charging control method of claim 1, wherein acquiring an output capability parameter of a charger and a battery input capability parameter of the charging terminal comprises:
acquiring a charging protocol supported by the charger, and querying the output capability parameter of the charger according to the charging protocol;
acquiring a battery specification of the charging terminal, wherein the battery specification comprises a correspondence between a battery temperature, a system temperature, and the battery input capability parameter; and
acquiring a current battery temperature and a current system temperature, and querying the battery input capability parameter from the battery specification according to the current battery temperature and the current system temperature.

4. The charging control method of claim 3, wherein the output capability parameter of the charger comprises a maximum output power of the charger, and the battery input capability parameter comprises a maximum input power of a battery; and obtaining a first charging power by comparing the output capability parameter with the battery input capability parameter comprises:
in response to the maximum output power of the charger being greater than the maximum input power of the battery, selecting the maximum input power of the battery as the first charging power; or
in response to the maximum output power of the charger being less than the maximum input power of the battery, selecting the maximum output power of the charger as the first charging power; or
in response to the maximum output power of the charger being equal to the maximum input power of the battery, selecting the maximum output power of the charger or the maximum input power of the battery as the first charging power.

5. The charging control method of claim 1, wherein selecting several candidate charging mode combinations from the plurality of charging mode combinations by comparing the first charging power with the second charging power comprises:
selecting, from the plurality of charging mode combinations, a charging mode combination in which the second charging power is less than the first charging power as a candidate charging mode combination by comparing the first charging power with the second charging power.

6. The charging control method of claim 1, wherein after performing charging using the target charging mode combination, the charging control method further comprises:
acquiring a current charging efficiency of the candidate charging mode combination; and
comparing the first charging efficiency with the current charging efficiency to obtain a charging efficiency comparison result, and adjusting the target charging mode combination according to the charging efficiency comparison result.

7. The charging control method of claim 6, wherein the charging efficiency comparison result comprises that a difference between the first charging efficiency and the current charging efficiency is less than a preset efficiency adjustment difference; and
adjusting the target charging mode combination according to the charging efficiency comparison result comprises:
selecting the candidate charging mode combination corresponding to the first charging efficiency as the target charging mode combination.

8. The charging control method of claim 6, wherein the charging efficiency comparison result comprises that the first charging efficiency is less than the current charging efficiency and a difference between the first charging efficiency and the current charging efficiency is greater than a preset efficiency adjustment difference; and
adjusting the target charging mode combination according to the charging efficiency comparison result comprises:
selecting the candidate charging mode combination corresponding to the current charging efficiency as the target charging mode combination.

9. The charging control method of claim 1, further comprising:
acquiring a new battery input capability parameter of the charging terminal;
obtaining a third charging power according to the new battery input capability parameter; and
comparing the first charging power with the third charging power to obtain a charging power comparison result, and adjusting the target charging mode combination according to the charging power comparison result.

10. The charging control method of claim 9, wherein the charging power comparison result comprises that the first charging power is greater than the third charging power; and
adjusting the target charging mode combination according to the charging power comparison result comprises:
acquiring a new second charging power of each of the charging mode combinations, comparing the third charging power with the new second charging power, and selecting several candidate charging mode combinations; and
acquiring a second charging efficiency of each of the candidate charging mode combinations, and determining the target charging mode combination from the several candidate charging mode combinations according to the second charging efficiency.

11. The charging control method of any of claims 1 to 10, wherein the charging chip operating mode comprises a proportional operating mode, a direct charging mode, and a switch charging mode, and the battery connection mode comprises a series mode and a parallel mode.

12. A controller, comprising a memory, a processor, and a computer program stored in the memory and executable by the processor, wherein the computer program, when executed by the processor, causes the processor to perform the charging control method of any of claims 1 to 11.

13. A charging terminal, comprising the controller of claim 12.

14. The charging terminal of claim 13, further comprising:
a battery, having at least two cells;
a charging chip, configured to control switching of a operating mode of the charging chip; and
a battery chip, electrically connected to the battery, and configured to acquire a battery input capability parameter of the charging terminal and control switching of a connection mode of the battery.

15. A computer-readable storage medium, storing a computer-executable instruction which, when executed by a computer, causes the compouter to perform charging terminal charging terminal charging terminalthe charging control method of any of claims 1 to 11.
